# EUROPEAN PATENT APPLICATION

(11) **EP 2 952 707 A1**
(43) Date of publication of application: **09.12.2015**
(21) Application number: 13873399.3
(22) Date of filing: 31.01.2013
(51) Int. Cl.: F02B 23/06

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: MICHIKAWAUCHI, Ryo, Toyota-shi, Aichi-ken, 471-8571 (JP)
(74) Representative: Smith, Samuel Leonard
(86) International application number: PCT/JP2013/052234
(87) International publication number: WO 2014/118947

(57) **Abstract**

An internal combustion engine 1 is an internal combustion engine of a compression ignition type. A bottom wall surface 311 has a pent-roof shape, and a bottom wall surface 712 has a protruding shape corresponding to the pent-roof shape. A piston 7 includes a squish portion S having a taper shape TP. The taper shape TP includes a bottom end portion TPB located on a side wall surface of a cavity 71 which a circumferential edge portion 711 includes. An injection hole 611C injects fuel to a region E3, and an injection hole 611A injects fuel to a region E1. An injection angle α3 of the injection hole 611C is set smaller than an injection angle α1 of the injection hole 611 A. A squish portion S1 is a portion, of the squish portion S, adjacent to the region E3, and a squish portion S2 is a portion, of the squish portion S, adjacent to the region E1. A height Hs of the squish portion S1 is lower than that of the squish portion S2.

## Description

### [TECHNICAL FIELD]

The present invention is related to an internal combustion engine.

### [BACKGROUND ART]

There is known an internal combustion engine of a compression ignition type in which a bottom wall surface of a cylinder head has a pent-roof shape and a cavity of a piston has a protruding shape corresponding to the pent-roof shape. Patent Document 1 discloses a direct injection internal combustion engine provided with a pent-roof shaped piston.

### [PRIOR ART DOCUMENT]

### [PATENT DOCUMENT]

[Patent Docuemnt 1] Japanese Unexamined Patent Application Publication No. 2008-14177

### [SUMMARY OF THE INVENTION]

### [PROBLEMS TO BE SOLVED BY THE INVENTION]

The fuel injection valve, which injects fuel to the combustion chamber of the internal combustion engine, injects the fuel between the head bottom wall surface and the cavity bottom wall surface. Further, each height of the head bottom wall surface and cavity bottom wall surface is changed in the circumferential direction of the combustion chamber of the internal combustion engine. For this reason, in the internal combustion engine, each injection angle of plural injection holes is typically set such that each injection angle is not constant between the plural injection holes provided in the fuel injection valve.

In the above mentioned internal combustion engine, however, due to setting the injection angle, a flowing manner in which an air fuel mixture flows into a squish region formed in the combustion chamber of the above mentioned internal combustion engine is not the same between air fuel mixtures formed based on the fuel injected from the above mentioned plural injection holes. This might result in low availability of air in the above mentioned squish region.

The present invention has been made in view of the above circumstances and has an object to provide an internal combustion engine of a compression ignition type that is capable of improving availability of air in a squish region in a case where a head bottom wall surface has a pent-roof shape and a cavity bottom wall surface has a protruding shape corresponding to the pent-roof shape.

### [MEANS FOR SOLVING THE PROBLEMS]

The present invention is an internal combustion engine of a compression ignition type including: a fuel injection valve that injects fuel to a combustion chamber; a cylinder head that includes a central portion as a portion forming the combustion chamber; and a piston that includes a cavity exposed to the combustion chamber, wherein the central portion includes a head bottom wall surface having a pent-roof shape, and the cavity includes a cavity bottom wall surface having a protruding shape corresponding to the pent-roof shape, the fuel injection valve includes an injection hole portion in which injection holes are provided in a circumferential direction, and is provided in a top portion of the pent-roof shape, the piston includes a squish portion forming a squish region in the combustion chamber and having a taper shape, the taper shape includes a bottom end portion located on a side wall surface of the cavity, an injection angle of an injection hole, of the injection holes, injecting fuel to a first region of the combustion chamber is set smaller than an injection angle of an injection hole, of the injection holes, injecting fuel to a second region of the combustion chamber, a height of a portion, of the bottom end portion of the squish portion, adjacent to the first region is set lower than a height of a portion, of the bottom end portion of the squish portion, adjacent to the second region, the heights being from a lowest portion of the cavity bottom wall surface in a cross-section including a central axis of the cavity.

The present invention can be configured such that an acute angle of the portion, of the taper shape of the squish portion, adjacent to the first region is set smaller than an acute angle of the portion, of the taper shape of the squish portion, adjacent to the second region, the respective acute angles being between the respective portions and a central axis of the cavity included in a cross-section including a central axis of the cavity or a straight line parallel with the central axis.

### [EFFECTS OF THE INVENTION]

According to the present invention, it is possible to improve availability of air in a squish region in a case where a head bottom wall surface has a pent-roof shape and a cavity bottom wall surface has a protruding shape corresponding to the pent-roof shape.

### [BRIEF DESCRIPTION OF THE DRAWINGS]

FIG. 1 is a schematic configuration view of an internal combustion engine;
FIG. 2 is a view of the internal combustion engine when viewed in a cross-section taken along line A-A of FIG. 1;
FIG. 3 is a view illustrating an injection hole portion;
FIG. 4 is an external view of a piston;
FIG. 5 is a top view of the piston;
FIG. 6 is a view of the piston when viewed in a cross-section taken along line B-B of FIG. 5;
FIG. 7 is a view of the piston when viewed in a cross-section taken along line C-C of FIG. 5;
FIG. 8 is a view illustrating a change in each parameter;
FIG. 9 is an explanatory view of a combustion chamber and plural injection holes;
FIG. 10 is a first explanatory view of injection angles, heights, and taper angles;
FIG. 11 is a second explanatory view of injection angles, heights, and taper angles; and
FIG. 12 is a view of another internal combustion engine.

### [MODES FOR CARRYING OUT THE INVENTION]

An embodiment according to the present invention will be described with reference to the drawings.

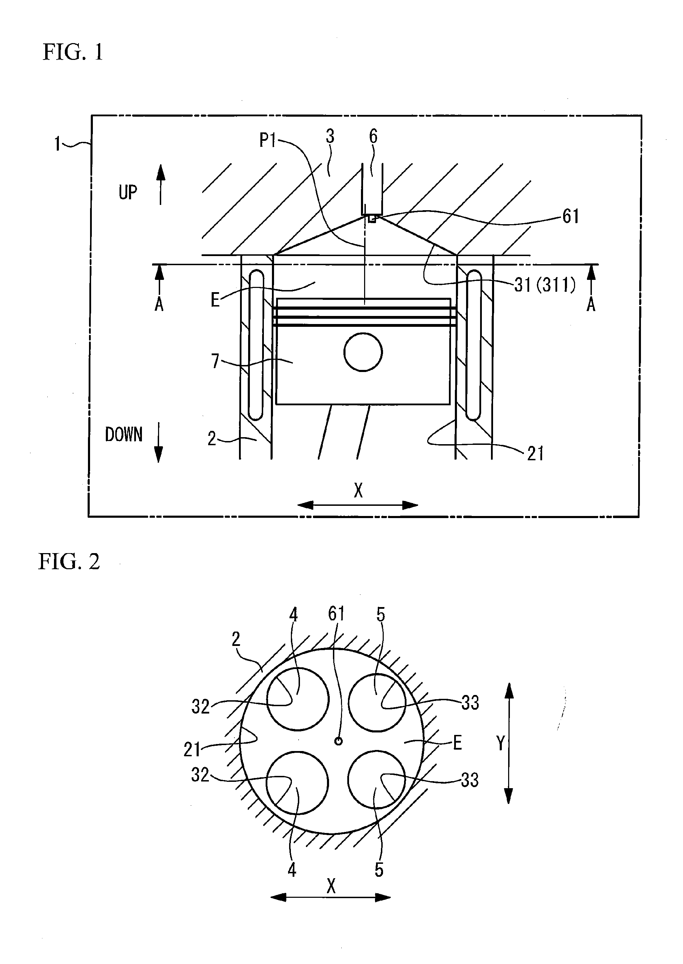

FIG. 1 is a schematic configuration view of an internal combustion engine 1. FIG. 2 is a view of the internal combustion engine 1 when viewed in a cross-section taken along line A-A of FIG. 1. FIG. 1 illustrates a cylinder head 3 and a cylinder block 2 of the internal combustion engine 1 in a cross-section including a central axis P1 that is a central axis of a combustion chamber E. As illustrated in FIG. 1, it is assumed that an upward and downward direction in the internal combustion engine 1 is the central axis P1 and that the cylinder head 3 is located above the cylinder block 2. The direction X illustrated in FIG. 1 and FIG. 2 indicates the intake and exhaust direction of the internal combustion engine 1. The Y direction illustrated in FIG. 2 indicates the front and rear directions of the internal combustion engine 1. FIG. 1 and FIG. 2 illustrate each simplified component.

The internal combustion engine 1 is a compression ignition type of an internal combustion engine. The internal combustion engine 1 can be an internal combustion engine in which a tumble flow is generated in the combustion chamber E. The internal combustion engine 1 includes the cylinder block 2, the cylinder head 3, intake valves 4, exhaust valves 5, a fuel injection valve 6, and a piston 7. A cylinder 21 is formed in the cylinder block 2. The cylinder 21 has the central axis P1. In other words, the cylinder 21 defines the central axis P1. The piston 7 is housed in the cylinder 21. The cylinder head 3 is secured to an upper portion of the cylinder block 2.

The cylinder head 3 forms the combustion chamber E in conjunction with the cylinder block 2 and the piston 7. In a bottom wall portion of the cylinder head 3, a central portion 31 that is a portion forms the combustion chamber E has a pent-roof shape. Specifically, a bottom wall surface 311 provided in the central portion 31 has a pent-roof shape. The bottom wall surface 311 corresponds to a head bottom wall surface.

Specifically, the pent-roof shape is configured to have a top portion located off the central axis P1 toward the exhaust side in the direction X. The central portion 31 (specifically, the bottom wall surface 311) may have a pent-roof shape with the top portion that is located at the central axis P1 in the direction X or off the central axis P1 toward the intake side.

Intake ports 32 and exhaust ports 33 are formed in the cylinder head 3. Further, the intake valves 4 and the exhaust valves 5 are provided. Both the intake ports 32 and the exhaust ports 33 open to the combustion chamber E. The intake ports 32 introduce intake air into the combustion chamber E, and the exhaust ports 33 exhaust gas from the combustion chamber E. The intake valve 4 opens and closes the intake port 32, and the exhaust valve 5 opens and closes the exhaust port 33.

Plural pairs (two pairs in this case) of the intake port 32 and the intake valve 4 are provided corresponding to the combustion chamber E. Also, plural pairs (two pairs in this case) of the exhaust port 33 and the exhaust valve 5 are provided corresponding to the combustion chamber E. Each intake port 32 may be an independent port independent of each other, or may be a part of a Siamese port which branches off partway and opens to the combustion chamber E. The specific shape of the intake ports 32 may be different from each other. These things are the same as each exhaust port 33.

The fuel injection valve 6 is further provided in the cylinder head 3. The fuel injection valve 6 injects fuel into the combustion chamber E. The fuel injection valve 6 includes an injection hole portion 61. The injection hole portion 61 is exposed from the central portion of the upper portion of the combustion chamber E. The fuel injection valve 6 is provided in the top portion of the pent-roof shape. Thus, the position of the fuel injection valve 6 in the direction X is set to match the top portion of the pent-roof shape of the central portion 31. Therefore, specifically, the fuel injection valve 6 is provided at a position off the central axis P1 toward the exhaust side in the direction X.

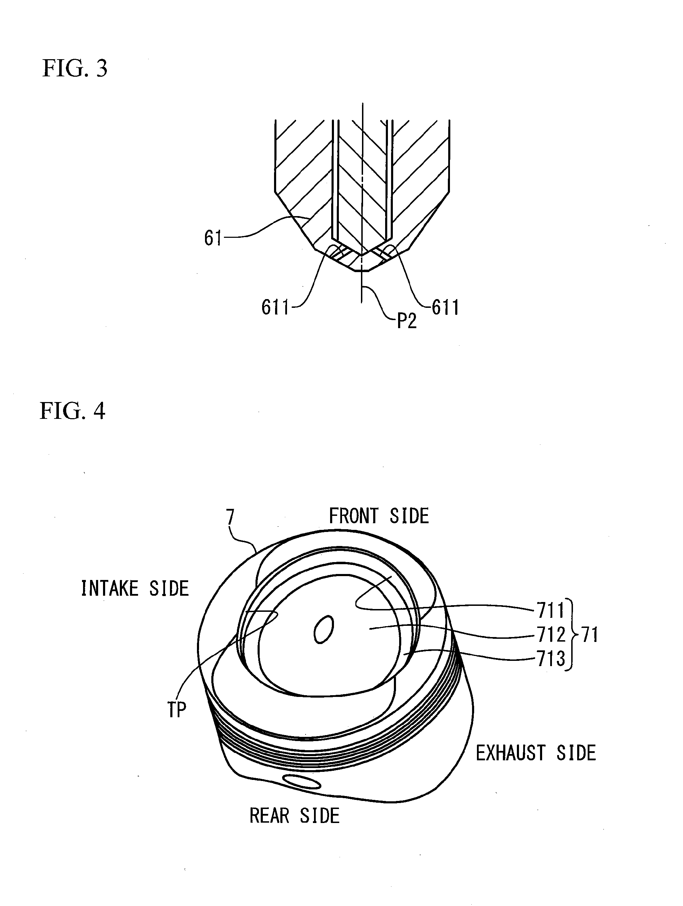

FIG. 3 is a view illustrating the injection hole portion 61. Injection holes 611 are provided in the injection hole portion 61. The injection hole portion 61 is a portion where the injection holes 611 are provided, and has a central axis P2. The injection hole portion 61 is specifically an end portion of a nozzle body provided in the fuel injection valve 6. Plural injection holes 611 (eight in this case) are provided in the injection hole portion 61 in the circumferential direction. The number of the plural injection holes 611 can be even.

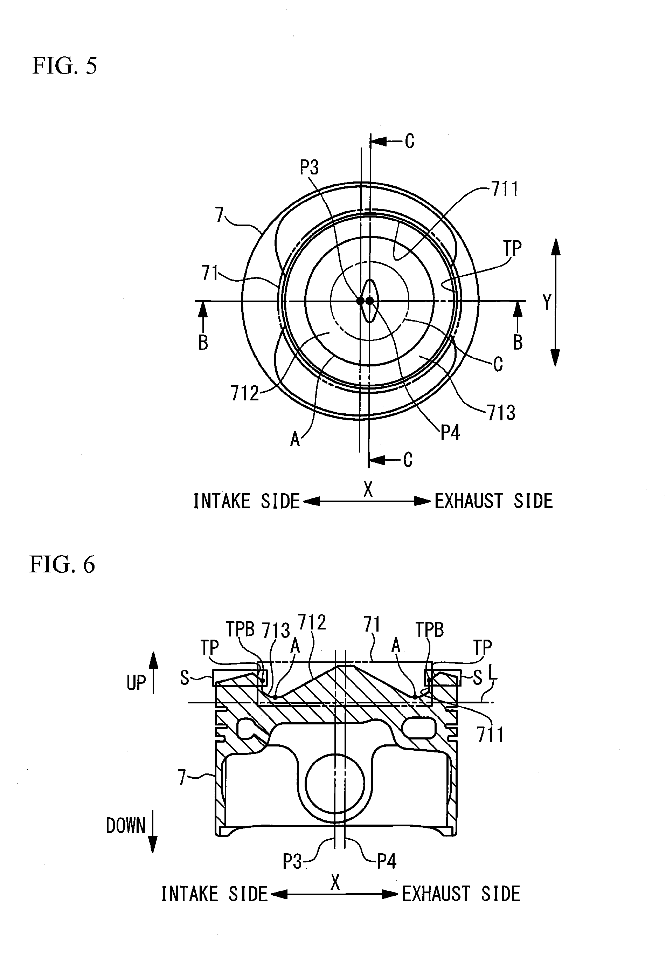

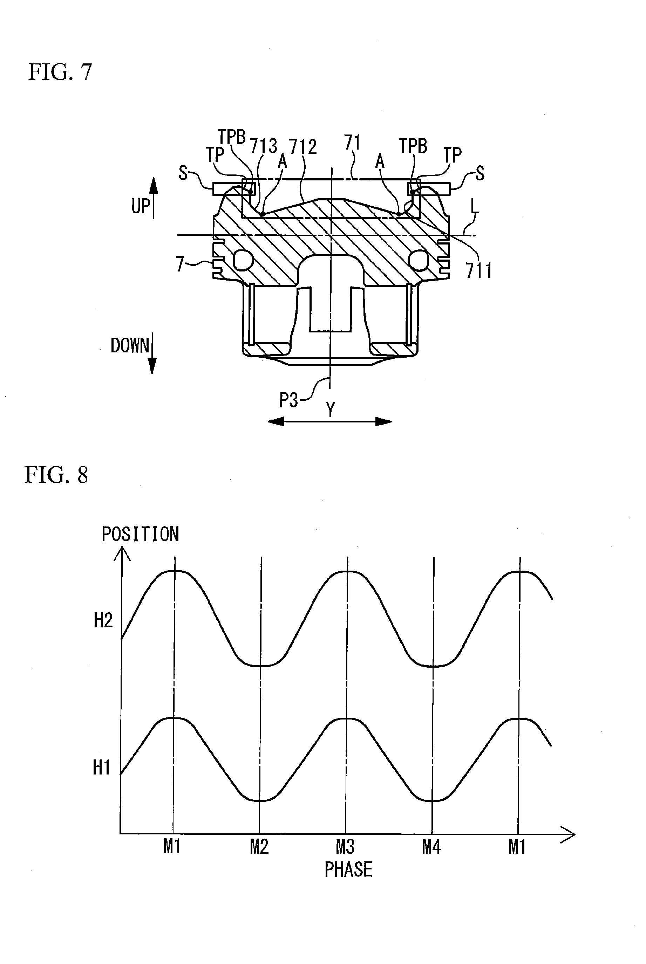

FIG. 4 is an external view of the piston 7. FIG. 5 is a top view of the piston 7. FIG. 6 is a view of the piston 7 when viewed in a cross-section taken along line B-B of FIG. 5. FIG. 7 is a view of the piston 7 when viewed in a cross-section taken along line C-C of FIG. 5. FIG. 4 to FIG. 7 illustrate the direction of the piston 7 in the internal combustion engine 1 by indicating the intake side, the exhaust side, the front side, and the rear side, and in addition to the vertical direction, the X direction, and the direction Y in the internal combustion engine 1. In the following description, the piston 7 will be described in consideration of the state of the internal combustion engine 1. Therefore, in the following description, the piston 7 will be described according to these indications as needed.

The piston 7 has a cavity 71. The cavity 71 is provided at the top portion of the piston 7. Therefore, the cavity 71 is exposed to the combustion chamber E in the internal combustion engine 1. The position of the cavity 71 in the direction X is set corresponding to the fuel injection valve 6. Therefore, the cavity 71 is provided at a position off the central axis P3 of a central axis of the piston 7 toward the exhaust side in the direction X. In the internal combustion engine 1, the piston 7 is provided such that the central axis P3 and the central axis P1 are located in the same position. Sameness includes difference between them within the manufacturing error range. Sameness also includes difference between them within as long as the present invention can have effects. The same applies hereinafter.

The cavity 71 includes a circumferential edge portion 711, a bottom wall surface 712, and an intermediate portion 713. The circumferential edge portion 711 has a cylindrical shape. The circumferential edge portion 711 is not always limited to have a cylindrical shape, for example, may have an elliptic cylindrical shape. The circumferential edge portion 711 has a central axis P4 that is the central axis of the cavity 71. In other words, the circumferential edge portion 711 defines the central axis P4.

The central axis P4 extends along the central axis P3. The central axis P4 is set at a position off the central axis P3 toward the exhaust side in the direction X. Specifically, the central axis P4 is set at the same position as the central axis P2 in the internal combustion engine 1.

The bottom wall surface 712 has a protruding shape. This shape is not axial symmetric with respect to the central axis P3, but with respect to the central axis P4. The bottom wall surface 712 shares the central axis P4 with the circumferential edge portion 711. The bottom wall surface 712 may not always share the central axis P4 with the circumferential edge portion 711. The bottom wall surface 712 corresponds to a cavity bottom wall surface. The intermediate portion 713 is provided between the circumferential edge portion 711 and the bottom wall surface 712, and connects the circumferential edge portion 711 with the bottom wall surface 712.

The bottom wall surface 712 specifically has a protruding shape corresponding to the pent-roof shape of the central portion 31. The top portion of the bottom wall surface 712 has a flat shape. The bottom wall surface 712 includes an adjacent portion A adjacent to the intermediate portion 713. In each cross-section of the piston 7 including the central axis P4 (for example, the cross-section illustrated in FIG. 6 or FIG. 7), the bottom wall surface 712 is provided such that one side and the other side sandwiching the central axis P4 each protrude from the height of the adjacent portion A. In each cross-section of the piston 7 including a central axis P4, the adjacent portions A respectively sandwiching the central axis P4 specifically have the same height.

In each cross-section, the adjacent portions A sandwiching the central axis P4 are further specifically portions lowest in the surface of the cavity 71. The positions of the adjacent portions A sandwiching the central axis P4 is higher in the cross-section illustrated in FIG. 7 than in the cross-section illustrated in FIG. 6. In each cross-section of the piston 7 including the central axis P4, the adjacent portions A sandwiching the central axis P4 may not always have the same height. The adjacent portion A corresponds to a lowest portion.

The piston 7 further includes a squish portion S. The squish portion S forms a squish region in the combustion chamber E. The squish portion S has a taper shape TP. The taper shape TP is provided along the outline of the circumferential edge portion 711 over its circumference. The taper shape TP includes a bottom end portion TPB on a side wall surface of the cavity 71 which the circumferential edge portion 711 includes.

Next, the bottom wall surface 712 will be further described with reference to FIG. 8. FIG. 8 is a view illustrating a change in each parameter. The vertical axis illustrated in FIG. 8 indicates a position in the direction of the central axis P 1. The horizontal axis illustrated in FIG. 8 indicates a phase (angular position) of which the rotational center is the central axis P4.

FIG. 8 illustrates a height H1 and a height H2 as each parameter. The height H1 is the height of the bottom wall surface 712, specifically, the height with respect to a virtual plane L (see FIG. 6 and FIG. 7) perpendicular to the central axis P4 and located under the bottom wall surface 712. The height H2 is the height of the bottom wall surface 311, specifically, the height with respect to a virtual plane (herein, virtual plane L) perpendicular to the central axis P1 and located under the bottom wall surface 311.

A phase M1 indicates a phase center in the front side as the rotational center of the phase is the central axis P4. A phase M2, a phase M3, and a phase M4 respectively indicate phase centers in the exhaust, rear, and intake sides of the phase. A direction R indicates the rotational direction from the phase M1 to the phase M2 side about the central axis P4 as a rotation center.

A change in each parameter illustrated in FIG. 8 means a change in the direction along the outline of the circumferential edge portion 711. The change in the direction along the outline of the circumferential edge portion 711 specifically means a change, which is based on the phase of which the rotational center is the central axis P4, and which is recognized along a virtual shape C corresponding to the shape of the circumferential edge portion 711 (see Fig. 5). The virtual shape C specifically shares the central axis P4 with the circumferential edge portion 711, and has a ring shape similar to the outline of the circumferential edge portion 711 viewed along the central axis P4.

The bottom wall surface 712 has such a shape as to change the height H1 in the direction along the outline of the circumferential edge portion 711. In contrast, the top portion of the bottom wall surface 712 has a flat shape. Thus, the bottom wall surface 712, specifically, the portion other than the top portion has such a shape as to change the height H1 in the direction along the outline of the circumferential edge portion 711. The bottom wall surface 712 can be a portion further including the surface of the intermediate portion 713. That is, the bottom wall surface 712 and the surface of the intermediate portion 713 can be the cavity bottom wall surface. The bottom wall surface 311 also has such a shape as to change the height H2 in the direction along the outline of the circumferential edge portion 711.

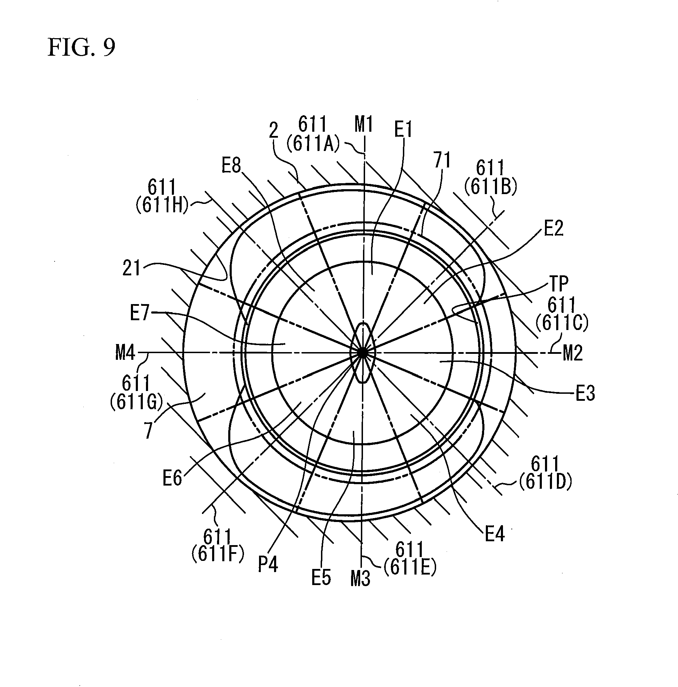

FIG. 9 is an explanatory view of the combustion chamber E and the plural injection holes 611. In FIG. 9, the injection holes 611 are represented by the central axes thereof. The combustion chamber E has the region E1 to the region E8 as plural regions. The plural injection holes 611 inject fuel to the region E1 to the region E8. An injection hole 611A indicates the injection hole 611 for injecting the fuel to the region E1. An injection hole 611B, an injection hole 611C, an injection hole 611D, an injection hole 611E, an injection hole 611F, an injection hole 611G, and an injection hole 611H indicate the injection holes 611 for injecting the fuel to the region E2, the region E3, the region E4, the region E5, the region E6, the region E7, and the region E8, respectively.

The region E1 to the region E8 are regions of which the phase centers are grasped based on the phases setting the central axes of the plural injection holes 611, respectively. In a state where the piston 7 is positionally fixed, the combustion chamber E is provided such that the cross-sectional area including the central axis P4 is substantially constant in the direction along the outline of the circumferential edge portion 711.

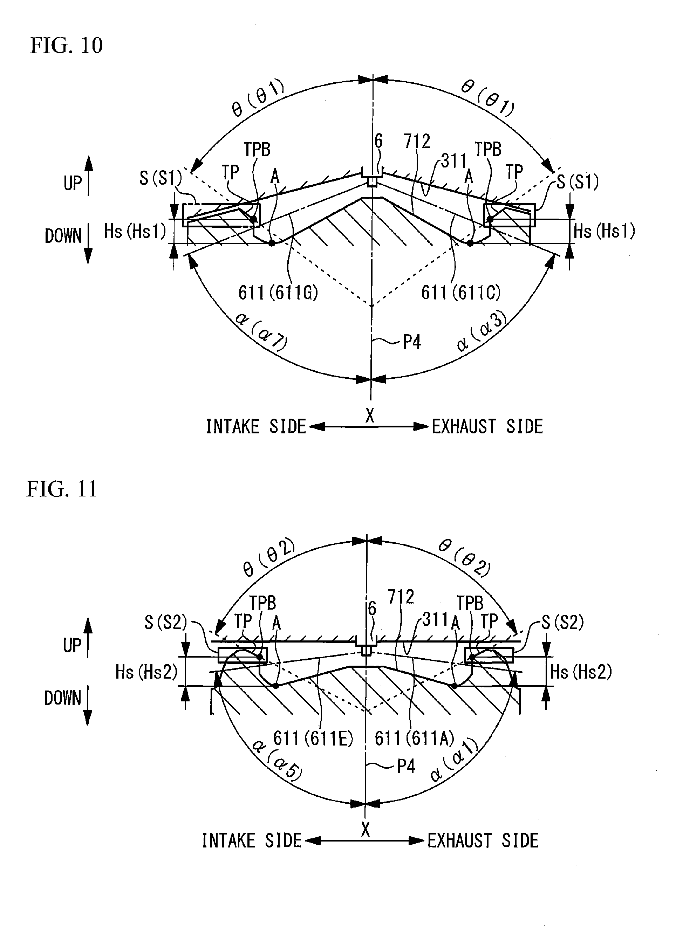

FIG. 10 is a first explanation view of injection angles α, heights Hs, and taper angles θ. FIG. 11 is a second explanation view of the injection angles α, the heights Hs, and the taper angles θ. In FIG. 10, a main portion of the internal combustion engine 1 is illustrated in a cross-section similar to the cross-section taken along line B-B of FIG. 5. In FIG. 11, the main portion of the internal combustion engine 1 is illustrated in a cross-section similar to the cross-section taken along line C-C of FIG. 5. In FIG. 10 and FIG. 11, the injection holes 611 are illustrated by central axes thereof. Each of the cross-sections illustrated in FIG. 10 and FIG. 11 is a cross-section including the central axis P4.

The injection angle α is any injection angle of the plural injection holes 611, specifically, an acute angle between any injection direction of the plural injection holes 611 and the central axis P2 or a straight line parallel with the central axis P2. An injection angle α1 indicates the injection angle α corresponding to the injection hole 611A. An injection angle α3, an injection angle α5, and an injection angle α7 indicate the injection angles α corresponding to the injection hole 611C, the injection hole 611E, and the injection hole 611G, respectively. Further, the injection hole 611B, the injection hole 611D, the injection hole 611F, and the injection hole 611H respectively have an injection angle α2, an injection angle α4, an injection angle α6, and an injection angle α8 not illustrated and serving as the injection angles α.

Each of the injection angle α3 and the injection angle α7 is smaller than each of the injection angle α1 and the injection angle α5. Thus, the region E3, to which the injection hole 611C injects the fuel, and the region E7, to which the injection hole 611 G injects the fuel, correspond to first regions in relation to the region E1, to which the injection hole 611A injects the fuel, or the region E5, to which the injection hole 611E injects the fuel. In addition, the region E1 and the region E5 correspond to second regions in relation to the region E3 or the region E7.

The specific magnitudes of the injection angle α3 and the injection angle α7 are the same as each other. Also, the specific magnitudes of the injection angle α1 and the injection angle α5 are the same as each other. The specific magnitude of the injection angle α can be set, for example, as follows. That is, in a state where the piston 7 is fixed at a reference position, the injection angle α is set such that any central axis of the plural injection holes 611 is positioned in the center between the bottom wall surface 311 and the bottom wall surface 712. The above mentioned reference position can be a position of the piston 7 at the time of the fuel injection, in a state where a driving state (for example, rotational speed and load) of the internal combustion engine 1 falls within a predetermined driving region.

The specific magnitude of the injection angle α can be set individually for the plural injection holes 611. The specific magnitude of the reference injection angle α may not be the same among the plural injection holes 611. The specific magnitude of the injection angle α may be set in further consideration of, for example, the influence of the swirl flow or the tumble flow generated in the combustion chamber E.

The height Hs is a height of the bottom end portion TPB on the basis of the adjacent portion A in the cross-section including the central axis P4. A height Hs1 indicates the height Hs corresponding to a squish portion S1. A height Hs2 indicates the height Hs corresponding to a squish portion S2. The squish portion S1 indicates a portion of the squish portion S adjacent to the region E3 or the region E7. The squish portion S2 indicates a portion of the squish portion S adjacent to the region E1 or the region E5. The height Hs1 is set lower than the height Hs2. Namely, the height Hs of the squish portion S1 is set lower than that of the squish portion S2.

The taper angle θ is an angle of the taper shape TP, and is specifically an acute angle between the taper shape TP and the central axis P4 or a straight line parallel with the central axis P4 in the cross-section including the central axis P4. A taper angle θ1 indicates the taper angle θ corresponding to the squish portion S1. A taper angle θ2 indicates the taper angle θ corresponding to the squish portion S2. The taper angle θ1 is set smaller than the taper angle θ2. Namely, the taper angle θ of the squish portion S 1 is set smaller than that of the squish portion S2.

Next, the main effects of the internal combustion engine 1 will be described. Herein, in each of the plural injection holes 611, it is more difficult for the air fuel mixture formed by the injected fuel to flow into the squish region as the injection angle α is set smaller. In contrast, the height Hs of the squish portion S 1 is set lower than that of the squish portion S2 in the internal combustion engine 1. Therefore, the internal combustion engine 1 facilitates the flow of the air fuel mixture into the squish region formed by the squish portion S1, thereby improving the air availability in the squish region. The internal combustion engine 1 improves the air availability in the squish region, thereby improving specifically the fuel consumption and the exhaust emission.

In contrast, when the height Hs is made lower while the taper angle θ of the squish portion S is maintained constant, the width of the taper shape TP is thus made larger (width in the radial direction about the central axis P4). The resultant change in the shape of the squish region reduces the intensity of the squish flow generated, so that the miscibility of the air fuel mixture might be degraded. In contrast, the taper angle θ of the squish portion S 1 is set smaller than that of the squish portion S2 in the internal combustion engine 1. Moreover, the internal combustion engine 1 suitably set the width of the taper shape TP, thereby improving the air availability in the squish region while further suppressing a decrease in the intensity of the squish flow.

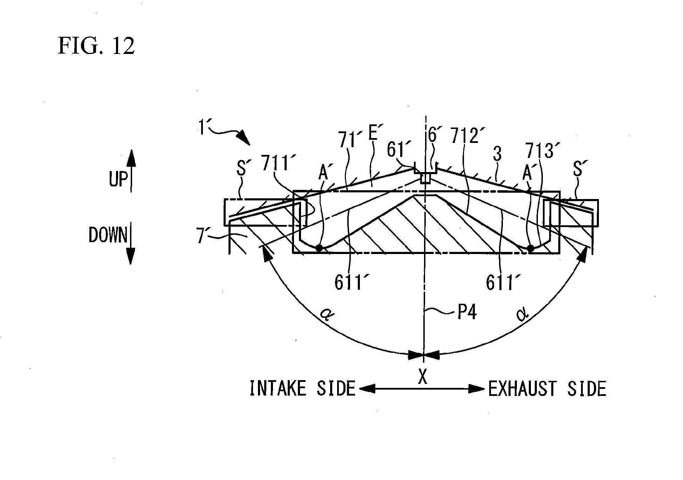

The internal combustion engine 1 can further reduce the difference in height of the bottom wall surface 712 as follows. FIG. 12 is a view illustrating a main portion of an internal combustion engine 1'. In FIG. 12, a main portion of the internal combustion engine 1' is illustrated in a cross-section similar to the cross-section taken along line B-B of FIG. 5. In FIG. 12, injection holes 611' are illustrated by central axes thereof. A cross-section illustrated in FIG. 12 is a cross-section including the central axis P4.

It can be said that the internal combustion engine 1' is another internal combustion engine different from the internal combustion engine 1 and is the internal combustion engine corresponding to the base of the internal combustion engine 1. The internal combustion engine 1' is the same as the internal combustion engine 1, except that a fuel injection valve 6' is provided instead of the fuel injection valve 6, that the piston 7' is provided instead of the piston 7, and that a combustion chamber E' is provided instead of the combustion chamber E.

The fuel injection valve 6' is another fuel injection valve different from the fuel injection valve 6, and is the same as the fuel injection valve 6 except that an injection hole portion 61' is provided instead of the injection hole portion 61. The injection hole portion 61' is another injection hole portion different from the injection hole portion 61, and is the same as the injection hole portion 61 except that the plural injection holes 611' are provided instead of the plural injection holes 611. The plural injection holes 611' are other plural injection holes different from the plural injection holes 611, and are the same as the plural injection holes 611 except that the specific magnitudes of the injection angles α are different.

The piston 7' is another piston different from the piston 7, and is the same as the piston 7, except that a squish portion S' is provided instead of the squish portion S, and that a cavity 71' is provided instead of the cavity 71. The squish portion S' is another squish portion different from the squish portion S, and is the same as the squish portion S except that the taper shape TP is not provided. The cavity 71' is another cavity different from the cavity 71, and is the same as the cavity 71, except that adjacent portions A' are provided instead of the adjacent portions A, and in response to this, except that a circumferential edge portion 711', a bottom wall surface 712', and an intermediate portion 713' are provided instead of the circumferential edge portion 711, the bottom wall surface 712, and the intermediate portion 713.

The adjacent portion A' is another adjacent portion different from the adjacent portion A, and is the same as the adjacent portion A except that the height at which the adjacent portion A' is provided is different. The adjacent portion A' is provided, specifically, at a position lower than that of the adjacent portion A. The circumferential edge portion 711', the bottom wall surface 712', and the intermediate portion 713' are respectively the same as the circumferential edge portion 711, the bottom wall surface 712, and the intermediate portion 713, except that the circumferential edge portion 711', the bottom wall surface 712', and the intermediate portion 713' are formed into such a shape that the adjacent portion A' serves as the lowest portion instead of the adjacent portion A.

The combustion chamber E' is another combustion chamber different from the combustion chamber E, and is the same as the combustion chamber E except that the combustion chamber E' has such a shape as to correspond to the shape of the piston 7' instead of the piston 7. Also, in the internal combustion engine 1', the combustion chamber E' is formed such that the cross-sectional area including the central axis P4 is substantially constant in the direction along the outline of the circumferential edge portion 711' in a state where the piston 7' is positionally fixed.

It can be said that the internal combustion engine 1 is an internal combustion engine achieved by cutting off the squish portion S' of the internal combustion engine 1' by using the taper shape TP and by increasing the height of the adjacent portion A' so as to reduce the size of the combustion chamber E' by the size cut off by using the taper shape TP in each cross-section of the combustion chamber E' including the central axis P4.

Thus, the taper angle θ is configured to be set such that the size of the portion in the internal combustion engine 1' cut off by the taper shape TP becomes larger as the height Hs of the squish portion S in the internal combustion engine 1 is set lower. Therefore, the difference in the height of the bottom wall surface 712 can be reduced, as compared to the bottom wall surface 712'. The internal combustion engine 1 can be configured in such a way, if the height Hs of the squish portion S 1 is set lower than that of the squish portion S2, or if the taper angle θ of the squish portion S 1 is lower than that of the squish portion S2.

In the internal combustion engine 1 configured in such a way, the difference in the height of the bottom wall surface 712 is reduced, whereby the injection angle α3 and the injection angle α7 of the relatively small injection angle α can be extended as compared with the internal combustion engine 1'. As a result, it is possible to facilitate the use of the squish region, as compared to the internal combustion engine 1'. In addition, in a case where the internal combustion engine 1 configured in such a way is an internal combustion engine in which the swirl flow is generated in the combustion chamber E, the difference in the height of the bottom wall surface 712 is reduced, whereby the internal combustion engine 1 can also suppress the attenuation of the swirl flow flowing in the combustion chamber E.

While the exemplary embodiments of the present invention have been illustrated in detail, the present invention is not limited to the above-mentioned embodiments, and other embodiments, variations and modifications may be made without departing from the scope of the present invention.

### [DESCRIPTION OF LETTERS OR NUMERALS]

| | |
|---|---|
| internal combustion engine | 1, 1' |
| cylinder head | 3 |
| central portion | 31 |
| bottom wall surface (head bottom wall surface) | 311 |

| | |
|---|---|
| fuel injection valve | 6, 6' |
| injection hole portion | 61, 61' |
| piston | 7, 7' |
| cavity | 71, 71' |
| bottom wall surface (cavity bottom wall surface) | 712, 712' |

## Claims

1. An internal combustion engine of a compression ignition type comprising:
a fuel injection valve that injects fuel to a combustion chamber;
a cylinder head that includes a central portion as a portion forming the combustion chamber; and
a piston that includes a cavity exposed to the combustion chamber,
wherein
the central portion includes a head bottom wall surface having a pent-roof shape, and the cavity includes a cavity bottom wall surface having a protruding shape corresponding to the pent-roof shape,
the fuel injection valve includes an injection hole portion in which injection holes are provided in a circumferential direction, and is provided in a top portion of the pent-roof shape,
the piston includes a squish portion forming a squish region in the combustion chamber and having a taper shape,
the taper shape includes a bottom end portion located on a side wall surface of the cavity,
an injection angle of an injection hole, of the injection holes, injecting fuel to a first region of the combustion chamber is set smaller than an injection angle of an injection hole, of the injection holes, injecting fuel to a second region of the combustion chamber,
a height of a portion, of the bottom end portion of the squish portion, adjacent to the first region is set lower than a height of a portion, of the bottom end portion of the squish portion, adjacent to the second region, the heights being from a lowest portion of the cavity bottom wall surface in a cross-section including a central axis of the cavity.

2. The internal combustion engine of claim 1, wherein
an acute angle of the portion, of the taper shape of the squish portion, adjacent to the first region is set smaller than an acute angle of the portion, of the taper shape of the squish portion, adjacent to the second region, the respective acute angles being between the respective portions and a central axis of the cavity included in a cross-section including a central axis of the cavity or a straight line parallel with the central axis.
